# EUROPÄISCHE PATENTANMELDUNG

(11) **EP 4 681 982 A1**
(43) Veröffentlichungstag der Anmeldung: **21.01.2026**
(21) Anmeldenummer: 25183225.9
(22) Anmeldetag: 17.06.2025
(51) Int. Cl.: B60L 58/12, B60L 58/16, G06F 8/65, B60W 50/04

(54) **COMPUTERIMPLEMENTIERTES VERFAHREN**

(30) Priorität: 03.07.2024 DE 102024118863
(71) Anmelder: CLAAS E-Systems GmbH, 49201 Dissen (DE)
(72) Erfinder: Redbrake, Jonas, 48346 Ostbevern (DE); Kerler, Dominik, 49196 Bad Laer (DE)
(74) Vertreter: CLAAS Gruppe

(57) **Zusammenfassung**

Die Erfindung betrifft ein computerimplementiertes Verfahren zur Beurteilung einer Durchführbarkeit von Anwendungen (A) auf einem durch einen elektrischen Energiespeicher (5) mit Energie versorgten Steuergerät (4) eines landwirtschaftlichen Fahrzeugs (1) mit dem Energiespeicher (5), das Verfahren umfassend
ein Ermitteln (100) eines ersten Energieparameters (P1), der auf einem zum Durchführen einer Anwendung (A) benötigten Energiewert (EA) basiert, und eines zweiten Energieparameters (P2), der auf einem von dem Energiespeicher (5) bereitstellbaren Energiewert (EB) basiert,
ein Vergleichen (110) des ersten (P1) und des zweiten (P2) Energieparameters, und
ein Unterbinden (120) oder Zulassen (130) eines Ausführens der Anwendung (A) in Abhängigkeit von dem Vergleichen (110).

## Beschreibung

Die vorliegende Erfindung betrifft ein computerimplementiertes Verfahren bei einem landwirtschaftlichen Fahrzeug, wobei das Fahrzeug einen elektrischen Energiespeicher und ein durch den Energiespeicher versorgtes Steuergerät zum Durchführen von Anwendungen aufweist. Die Erfindung betrifft ferner ein landwirtschaftliches Fahrzeug mit einer Einrichtung zum Durchführen eines Verfahrens.

Aus der Praxis sind computerimplementierte Verfahren bei landwirtschaftlichen Fahrzeugen bekannt. Insbesondere ist es bekannt, ein Steuergerät des Fahrzeugs mit elektrischer Energie aus einem Energiespeicher bzw. einer Batterie des Fahrzeugs zu versorgen, damit das Steuergerät Anwendungen, beispielsweise Programme und/oder Software-Updates, ausführen und durchführen bzw. abschließen kann. Um sicherzustellen, dass der Energiespeicher fortwährend die Versorgung leisten und das eine Anwendung ausführende Steuergerät ordnungsgemäß versorgt werden kann, ist typischerweise vorgesehen, den Energiespeicher mit einer Energiequelle des Fahrzeugs, z.B. einer vom Antriebsmotor des Fahrzeugs angetriebenen Lichtmaschine, und/oder mit einer externen bzw. vom Fahrzeug separaten Energiequelle regelmäßig aufzuladen und/oder den Energiespeicher gegen einen aufgeladenen bzw. erneuerten Batteriespeicher auszutauschen. Regelmäßig ist jedoch der aktuelle Zustand des Energiespeichers nicht genau bekannt. Es gibt insbesondere Ansätze, die bezwecken, den Energiespeicher hinsichtlich seines Zustands, beispielsweise seiner aktuellen Ladung, Leistungsfähigkeit und/oder verbleibenden Lebensdauer, mit einem Batteriesensor zu überwachen. Es ist jedoch so, dass Batteriesensoren teuer sind, weshalb es in dieser Hinsicht Ansätze gibt, um den Zustand des Energiespeichers zu ermitteln.

Die US 11,282,306 B2 beschreibt eine Vorhersage über einen Zustand einer Batterie anhand von historischen Spannungsdaten und einem Vorhersagealgorithmus. Die US 11,282,306 B2 beschreibt ein Verfahren zur Überwachung einer Fahrzeugbatterie. Es werden historische Spannungsdaten empfangen, der Vorhersagealgorithmus wird auf einer Analyse der Spannungsdaten basierend trainiert, Zielspannnungsdaten der Batterie werden empfangen und eine Vorhersage eines Zustands der Batterie wird erzeugt. Die Vorhersage basiert auf dem Vorhersagealgorithmus und einem Minimum der Spannungsdaten bzw. der Spannung. Die vorbekannten Verfahren sind verbesserungsbedürftig hinsichtlich der Komplexität und der Implementierbarkeit in landwirtschaftliche Fahrzeuge.

Der vorliegenden Erfindung liegt die Aufgabe zugrunde, ein mit Blick auf die Energieversorgung des Steuergeräts verbessertes Verfahren und ein verbessertes Fahrzeug anzugeben. Insbesondere sollen Lösungen angegeben werden, um ein Steuergerät eines landwirtschaftlichen Fahrzeugs beim Durchführen von Anwendungen darauf ordnungsgemäß mit elektrischer Energie zu versorgen oder zumindest um das Steuergerät besser gegen eine Unterversorgung mit Blick auf eine durchzuführende Anwendung zu schützen. Insbesondere sollen die Nachteile aus dem Stand der Technik vermieden oder zumindest reduziert werden.

Die Aufgabe wird erfindungsgemäß durch die Merkmale der unabhängigen Ansprüche gelöst.

Vorgeschlagen wird ein computerimplementiertes Verfahren zur Beurteilung einer Durchführbarkeit von Anwendungen auf einem durch einen elektrischen Energiespeicher mit Energie versorgten Steuergerät eines landwirtschaftlichen Fahrzeugs mit dem Energiespeicher. Das Verfahren umfasst
ein Ermitteln eines ersten Energieparameters, der auf einem zum Durchführen einer Anwendung benötigten Energiewert basiert, und eines zweiten Energieparameters, der auf einem von dem Energiespeicher bereitstellbaren Energiewert basiert,
ein Vergleichen des ersten und des zweiten Energieparameters, und
ein Unterbinden oder Zulassen eines Ausführens der Anwendung in Abhängigkeit von dem Vergleichen.

Anders gesagt, beispielsweise, wird ein Betriebsverfahren eines Steuergeräts vorgeschlagen, wobei ein derzeitiger Gesundheitszustand des Energiespeichers mit einem notwendigen Gesundheitszustand abgeglichen wird, wobei der notwendige Gesundheitszustand das bzw. die Erfordernisse charakterisiert, wonach auf dem Steuergerät ein bestimmtes Programm ordnungsgemäß ablaufen kann. Hierzu wird in Bezug auf das Programm ermittelt, welcher Gesundheitszustand erforderlich ist. Weiter wird in Bezug auf den Energiespeicher ermittelt, welcher Gesundheitszustand vorliegt. Die ermittelten Gesundheitszustände werden verglichen, woraufhin entschieden wird, ob das Programm ablaufen darf oder nicht. Der Ablauf des Programms selbst muss nicht zwangsweise stattfinden, denn allein die Entscheidung verhilft bereits zum Schutz des Steuergeräts. Es können so Fälle einer drohenden Unterversorgung des Steuergeräts mit diesem Ansatz vermieden werden.

Die Erfindung hat erkannt, dass in der Praxis viele Problemfälle damit vermieden werden, wenn in erster Linie die Durchführbarkeit von Anwendungen beurteilt wird, bevor die jeweilige Anwendung überhaupt ausgeführt wird. So kann es sein, dass mangelnde Durchführbarkeit vorliegt, und dass die Anwendung dank der Erfindung gar nicht erst ausgeführt werden kann, was die Funktionsfähigkeit des Fahrzeugs sicherstellt, wenngleich die Anwendung nicht durchgeführt wird. Meist wiegt das Nichtdurchführen der Anwendung weniger schwer, als wenn die Anwendung unkontrolliert abgebrochen wird bzw. abstützt, weil der Energiespeicher unzureichend geladen war oder grundsätzlich nicht leistungsfähig genug für die jeweilige Anwendung ist. Denn bei solch einem Abbruch bzw. Absturz kann das Steuergerät zumindest vorübergehend funktionslos werden, so dass eine Reparatur erforderlich ist. Die Erfindung gleicht hier Energieparameter ab, so dass nicht unbedingt ein Batteriesensor erforderlich ist. Vielmehr kann dank des Vergleichs energiebezogener Werte darauf geschlossen werden, ob der Energiespeicher für eine bestimmte Anwendung leistungsfähig, gesund und/oder geladen genug ist oder nicht.

Die Erfindung schafft zahlreiche Vorteile. Insbesondere kann sichergestellt werden, dass das Steuergerät bei einem Ausführen einer Anwendung ausreichend mit Energie versorgt wird. Weiter ist es möglich, dass das Verfahren ohne einen Batteriesensor durchgeführt wird. Das Verfahren schafft eine Grundlage, das Steuergerät vor Beschädigung durch Unterversorgung zu schützen, wenn Anwendungen darauf ausgeführt werden sollen. Es kann vermieden werden, dass das Ausführen von Anwendungen abgebrochen wird. Die Erfindung steigert insoweit die Langlebigkeit des Steuergeräts und im Grunde des Fahrzeugs selbst, indem das Risiko einer Unterversorgung durch den Energiespeicher reduziert wird.

Die Erfindung befasst sich mit der Thematik, dass Software-Updates bzw. Updates zunehmend "over the air" bzw. aus der Ferne und insbesondere kabellos ermöglicht werden sollen. Ein Update kann durch das Durchführen einer Anwendung vollzogen werden. Um die Anwendung ordnungsgemäß aus- und durchzuführen, ist eine Energieversorgung des involvierten Steuergeräts erforderlich. Da während solcher Updates der Antriebsmotor typischerweise außer Betrieb sein muss, ist im Fahrzeug regelmäßig nur der Energiespeicher als Versorgung geeignet. Wenn nicht sichergestellt werden kann, dass der Energiespeicher ausreichend Energie zur Verfügung stellen kann, besteht das Risiko, dass das Update fehlschlägt oder gar das Steuergerät funktionslos wird. Gleichwohl schafft hier die Erfindung die Abhilfe, dass das Anschließen einer externe Energiequelle bzw. Stromversorgung nicht zwangsweise erforderlich wird. Insoweit viele Fahrzeuge heutzutage keinen Batteriesensor verbaut haben, der beispielsweise den Lade- bzw. Gesundheitszustand des Energiespeichers ermitteln kann, bietet die Erfindung vorteilhafte Lösungen, um die Anwendung auf Grundlage der Versorgung des Steuergeräts durch den Energiespeicher erfolgreich durchzuführen.

Insbesondere schafft die Erfindung die Möglichkeit einer Beurteilung, ob eine Anwendung im Stillstand des Fahrzeugs, insbesondere ohne Motorlauf, aus- bzw. durchgeführt werden kann, ohne dass es zu einem Abbruch der Anwendung wegen mangelnder Versorgung kommt. Beispielsweise kann als Anwendung ein Remote-Software-Update ohne externe Spannungsversorgung bzw. ohne externe Energiequelle freigegeben werden. Alternativ oder ergänzend die externe bzw. vom Fahrzeug separate Energiequelle angeordnet werden, insbesondere vorab oder zumindest rechtzeitig, bevor die Anwendung fehlschlägt.

Insbesondere schlägt die Erfindung einen Abgleich der sich aus der Anwendung und ggf. anderen Verbrauchern des Fahrzeugs ergebenden energetischen Erfordernisse und der aus dem derzeitigen Zustand des Energiespeichers resultierenden energetischen Möglichkeiten vor.

Das Fahrzeug ist ein landwirtschaftliches Fahrzeug, beispielsweise Traktor, Erntemaschine und/oder dergleichen, insbesondere Mähdrescher oder Feldhäcksler. Das Fahrzeug weist beispielsweise einen insbesondere als Verbrennungsmotor ausgebildeten Antriebsmotor, das Steuergerät und den Energiespeicher auf. Das Fahrzeug kann auch als Hybridfahrzeug oder als reines Elektrofahrzeug ausgebildet sein.

Der Energiespeicher kann beispielsweise als Batterie bzw. Akkumulator ausgebildet sein. Der Energiespeicher kann beispielsweise einen Startermotor eines Antriebsmotors des Fahrzeugs versorgen. Der Energiespeicher kann beispielsweise von einer Lichtmaschine bzw. einem Generator des Fahrzeugs versorgt bzw. aufgeladen werden. Der Energiespeicher kann das Steuergerät versorgen. Insbesondere ist der Energiespeicher zur Energieübertragung mit dem Steuergerät verkabelt. Der Energiespeicher kann eine Nennspannung von 12 V, 24 V, 48 V oder eine andere Spannung aufweisen. Der Energiespeicher kann einen Blei-Akku, einen Lithium-Akku oder einen anderen Typ aufweisen.

Das Steuergerät kann als Computer ausgebildet sein. Steuergeräte sind regelmäßig zum Steuern bzw. Regeln von Einrichtungen des Fahrzeugs und/oder Einrichtungen am Fahrzeug eingerichtet. Das Steuergerät kann zum Steuern bzw. Regeln beispielsweise Anwendungen ausführen. Das Steuergerät weist typischerweise einen Speicher mit Software auf, beispielsweise mit einem Betriebssystem des Steuergeräts. Das Steuergerät kann ein Update erfahren bzw. geupdated werden; dabei kann das Steuergerät, insbesondere das Betriebssystem oder Teile davon, aktualisiert werden. Wenn das Steuergerät aktualisiert wird, ist es regelmäßig von besonderer Wichtigkeit, dass die Energieversorgung währenddessen bedarfsgerecht funktioniert bzw. nicht unterbrochen wird. Das macht es beispielsweise erforderlich, dass die Ladung des Energiespeichers ausreichend ist, um eine Anwendung, insbesondere zum Aktualisieren bzw. eine als Update ausgebildete Anwendung, durchzuführen.

Das Durchführen umfasst regelmäßig, die Anwendung auszuführen bzw. das Ausführen, die Anwendung so lange wie anwendungsgemäß mindestens nötig durchlaufen zu lassen bzw. zu betreiben, und zu beenden. Anders gesagt kann "Durchführen" als jeweils ordnungsgemäßes Starten, Betreiben und Beenden verstanden werden, insbesondere wobei "Ausführen" das vorgenannte Starten und ggf. Betreiben umfasst.

Das Fahrzeug weist regelmäßig mehrere Steuergeräte auf, beispielsweise ein Motorsteuergerät, ein Instrumentensteuergerät, ein Erntevorsatz-Steuergerät und/oder dergleichen. Vorzugsweise kann der Energiespeicher mehrere oder alle der Steuergeräte versorgen, insbesondere wenn der Antriebsmotor des Fahrzeugs still steht. Einzelne Steuergeräte können auch Steuergeräte-Teile aufweisen bzw. daraus gebildet sein.

Es ist möglich, dass je Steuergerät eine eigene Anwendung vorgesehen ist, oder dass sich die Anwendung für mehrere oder alle Steuergeräte eignet bzw. darauf aus- bzw. durchführbar ist. Beispielsweise können auch Teile der Anwendung je Steuergerät vorgesehen sein. Das vorgeschlagene Verfahren kann sich auch auf einen Teil einer Anwendung beziehen oder auf mehrere Anwendungen, für die das Ermitteln bzw. der Vergleich vollzogen wird/werden.

Das Verfahren ist wenigstens teilweise computerimplementiert. Beispielsweise wird das Verfahren teilweise oder ganz auf einem Computer, beispielsweise dem Steuergerät und/oder auf einem vom Fahrzeug separaten Gerät, ausgeführt. Das Verfahren kann auch teilweise cloudbasiert ausgeführt werden. Es ist auch möglich, dass das Verfahren teilweise von einem Bediener durchgeführt wird, beispielsweise mit Blick auf ein Anschließen einer Energiequelle.

Das Verfahren ist zur Beurteilung einer Durchführbarkeit von Anwendungen auf dem Steuergerät ausgebildet bzw. vorgesehen. Das Verfahren kann insoweit die Durchführbarkeit von Anwendungen bzw. Programmen, also insbesondere das Starten bzw. Ausführen und das Beenden derselben, bewerten. Insbesondere kann das Verfahren den Energiespeicher und die Anwendung selbst berücksichtigen. Die Durchführbarkeit kann exemplarisch die Werte "ja" oder "nein" umfassen, also "ja, die Anwendung kann durchgeführt werden" bzw. "nein, die Anwendung kann nicht durchgeführt werden". Das Verfahren kann neben der Durchführbarkeit noch weitere Aspekte adressieren bzw. dazu eingerichtet sein; insbesondere kann das Verfahren auch das Ausführen bzw. das Durchführen der Anwendung umfassen.

Vorgeschlagen wird, dass der erste und der zweite Energieparameter ermittelt werden. Beispielsweise werden beim Ermitteln aktuelle und/oder historische Messwerte, in der Anwendung umfasste Werte und/oder Erfahrungswerte herangezogen. Das Ermitteln kann sensorisch und/oder auf Grundlage von Eingaben bzw. eingegebenen Daten und/oder aus einer Datenbank abgerufenen Daten, beispielsweise aus einer Cloud und/oder einem lokalen Speicher am oder im Fahrzeug, erfolgen.

Der erste Energieparameter basiert, vorzugsweise mittelbar oder unmittelbar, wenigstens auf einem zum Durchführen einer Anwendung benötigten Energiewert. Der erste Energieparameter kann den benötigten Energiewert bzw. mehrere davon aufweisen oder dadurch gebildet sein. Der benötigte Energiewert kann eine elektrische Leistung, eine elektrische Energie bzw. Energiemenge oder Ladungsmenge, eine elektrische Spannung, eine zur Versorgung benötigte Zeitdauer, eine elektrische Stromstärke, eine Kombination aus Vorgenanntem, Minimal-, Durchschnitts-, und/oder Maximalwerte, und/oder dergleichen umfassen.

Der benötigte Energiewert kann sich auf das Durchführen der Anwendung selbst und optional auf weitere Verbraucher des Fahrzeugs, beispielsweise weitere Steuergeräte oder dergleichen, beziehen bzw. deren Verbrauch berücksichtigen. Beispielsweise umfasst der benötigte Energiewert eine Energiemenge um die Anwendung durchzuführen und/oder eine minimal benötigte Spannung bzw. Mindestspannung, um den Betrieb des Steuergeräts sicherzustellen. Beispielsweise umfasst der benötigte Energiewert eine durchschnittlich benötigte Stromstärke, eine minimal benötigte Spannung und/oder eine benötigte Zeitdauer.

Der benötigte Energiewert kann sich auf zum Anlassen des Antriebsmotors des Fahrzeugs benötigten Energieverbrauch bzw. entsprechende Erfordernisse beziehen bzw. diesen berücksichtigen. Insbesondere kann über den ersten Energieparameter bzw. den benötigten Energiewert auch der Energiebedarf des Fahrzeugs abseits von dem eigentlichen Durchführen der Anwendung berücksichtigt werden, um während und/oder nach dem Durchführen der Anwendung die Funktion des Fahrzeugs sicherzustellen.

Der zweite Energieparameter basiert, vorzugsweise mittelbar oder unmittelbar, auf einem von dem Energiespeicher bereitstellbaren Energiewert. Der zweite Energieparameter kann den bereitstellbaren Energiewert bzw. mehrere davon aufweisen oder dadurch gebildet sein. Der bereitstellbare Energiewert kann eine elektrische Leistung, eine elektrische Energie bzw. Energiemenge oder Ladungsmenge, eine zur Versorgung bereitstellbare Zeitdauer, eine elektrische Stromstärke, eine Kombination aus Vorgenanntem, Minimal-, Durchschnitts-, und/oder Maximalwerte, und/oder dergleichen umfassen.

Der zweite Energieparameter bzw. der bereitstellbare Energiewert ist insbesondere als die Fähigkeit des Energiespeichers zur Bereitstellung von Energie zu verstehen. Der zweite Energieparameter kann insbesondere im Fahrzeug selbst ermittelt werden, beispielsweise durch eine Einrichtung und/oder durch das Steuergerät selbst.

Beispielsweise umfasst der bereitstellbare Energiewert eine Energiemenge, die der Energiespeicher noch bereitstellen kann, und/oder eine derzeit bereitstellbare bzw. bereitgestellte Spannung. Beispielsweise umfasst der bereitstellbare Energiewert eine maximal bereitstellbare Stromstärke, eine minimal bereitstellbare Spannung und/oder eine Zeitdauer, für die eine ausgewählte Stromstärke und/oder Leistung bereitgestellt werden kann/können.

Das Vergleichen des ersten und des zweiten Energieparameters betrifft beispielsweise einen logischen bzw. mathematischen Vergleich. Beispielsweise kann, insbesondere automatisch, verglichen werden, ob der benötigte Energiewert vom bereitstellbaren Energiewert erreicht wird. Es kann, exemplarisch, verglichen werden, ob die bereitstellbare Leistung und/oder Energie der benötigten Leistung bzw. Energie entspricht bzw. hoch genug ist oder ob die bereitstellbare Leistung bzw. Energie zu niedrig ist. Beim Vergleichen können auch mehrere Energiewerte verglichen werden. Beispielsweise werden zwei oder mehr bereitstellbare Energiewerte mit zwei oder mehr benötigten Energiewerten verglichen.

Das Unterbinden oder Zulassen des Ausführens der Anwendung in Abhängigkeit von dem Vergleichen betrifft insbesondere eine Entscheidung unter Berücksichtigung des vorangegangenen Vergleichs. Diese Entscheidung wird beispielsweise ausschließlich anhand des Vergleichs getroffen bzw. hängt ausschließlich von dieser ab. Es kann entschieden werden, dass die Anwendung im Hinblick auf die Energieversorgung ausgeführt werden darf, weil die Energieversorgung zumindest für das Durchführen der Anwendung einen ausreichenden Zustand aufweist. Das Zulassen vermag als eine Freigabe zum Ausführen verstanden werden, wobei das Ausführen selbst nicht ausgelöst werden muss. Anders gesagt kann das Zulassen als Grundvoraussetzung mit Blick auf den Zustand des Energiespeichers und dem Durchführen einer ausgewählten Anwendung bedeuten. Dagegen soll das Unterbinden bezwecken, dass die Anwendung nicht ausgeführt werden kann bzw. darf. Das Unterbinden kann als fehlende Freigabe zum Ausführen verstanden werden.

Vorzugsweise kann bei einem Überschreiten des zweiten Energieparameters durch den ersten Energieparameter das Unterbinden erfolgen. Das Unterbinden kann insbesondere bei einem Überschreiten des bereitstellbaren Energiewerts oder eines von zwei oder mehr bereitstellbaren Energiewerten durch den benötigten Energiewert bzw. einen von zwei oder mehr bereitstellbaren Energiewerten erfolgen. Alternativ oder ergänzend kann ein Anschließen einer elektrischen Energiequelle angefordert werden. Die elektrische Energiequelle ist insbesondere von dem Energiespeicher und/oder von dem Fahrzeug separat angeordnet; beispielsweise ist hier eine Ladesäule bzw. ein externes Ladegerät vorgesehen. Das Anschließen kann abgewartet werden. Das Anschließen kann insbesondere abgewartet werden, um bei angeschlossener Energiequelle das Zulassen durchzuführen oder das Vergleichen zu wiederholen.

Bei dem Vergleichen kann eine Differenz zwischen dem zweiten Energieparameter und dem ersten Energieparameter berechnet werden, insbesondere zwischen den jeweiligen Energiewerten. Beispielsweise kann damit bestimmt werden, ob die Differenz größer oder kleiner als Null ist, insbesondere also ob die Differenz groß genug ist oder zu klein ist. Basierend auf der Differenz kann eine Anzeige des Fahrzeugs und/oder eines vom Fahrzeug separaten Geräts einen Inhalt zur Durchführbarkeit von Anwendungen bzw. von der Anwendung anzeigen. Der Inhalt kann in Form einer Benachrichtigung vorliegen, beispielsweise in Form eines Warntons und/oder einer Warnmeldung. Der Inhalt zur Durchführbarkeit kann beispielsweise anhand der Differenz abgeleitet werden oder der Differenz entsprechen. Beispielsweise kann der Inhalt einer noch nötigen Motorlaufzeit zum ausreichenden Aufladen des Energiespeichers entsprechen. Beispielsweise könnte eine Energie von mehr als 0 Wh, insbesondere zumindest 100 Wh, nötig sein, damit die Durchführbarkeit einer Anwendung positiv entschieden bzw. bzw. das Zulassen erfolgt. Insoweit kann die Anzeige anzeigen, dass die Energie von mehr als 0 Wh noch aufzuladen ist. Die Anzeige kann auch die zum Aufladen von der Energie von mehr als 0 Wh benötigte Zeit, insbesondere Motorlaufzeit und/oder Ladezeit mittels externer Energiequelle, anzeigen.

Die Energieparameter und/oder die Energiewerte können dimensionslose Zahlenwerte annehmen. Die Energieparameter können an einem oder mehreren jeweiligen Energiewerten orientiert sein und/oder zu diesen korrelieren. Beispielsweise kann ein Energieparameter und/oder ein Energiewert zwischen 0 und 1 bzw. zwischen 0 und 100% liegen, einschließlich der Grenzwerte, und mit oder ohne Dimensionsangabe.

Es ist möglich, dass ein Energieparameter bzw. Energiewert ausgewählt ist aus Zahlen von 0 bis 10. Beispielsweise kann der erste Energieparameter 6 betragen und der zweite Energieparameter 10; das könnte bedeuten, dass der Energiespeicher voll aufgeladen ist und die Anwendung durchführbar ist. Die Differenz beträgt in diesem Fall 4 (plus vier); diese Differenz ist also größer Null und damit groß genug bzw. nicht zu klein, so dass die Durchführbarkeit gegeben sein kann. Nach dem Durchführen ist es möglich, dass der zweite Energieparameter aufgrund der Entladung des Energiespeichers und weiterem Energieverbrauch vom Fahrzeug 4 oder weniger beträgt, so dass dieselbe Anwendung nicht mehr durchgeführt werden kann, insbesondere weil der erste Energieparameter für diese Anwendung weiterhin 6 betragen kann.

Nach dem Vergleichen und/oder dem Zulassen kann das Ausführen der Anwendung erfolgen bzw. vorgesehen sein. Insoweit kann das Verfahren zusätzlich vorsehen, dass die Anwendung ausgeführt und insbesondere durchgeführt bzw. bis zum ordnungsgemäßen Beenden ausgeführt wird. Insbesondere kann ein Software-Update des Steuergeräts aus- bzw. durchgeführt werden. Zur zusätzlichen Sicherstellung eines ordentlich ablaufenden Verfahrens kann während des Ausführens kann ein Energiewert, beispielsweise eine Spannung, des Energiespeichers überwacht werden. Wenn der Energiewert des Energiespeichers, beispielsweise die Spannung des Energiespeichers, einen Mindestwert bzw. eine Mindestspannung zum Betreiben eines/des Steuergeräts unterschreitet, kann vorgesehen sein, dass ein/das Anschließen einer/der von dem Fahrzeug separaten elektrischen Energiequelle angefordert wird und/oder das Ausführen kontrolliert beendet wird.

Es kann sein, dass während dem Ausführen bzw. Durchführen der Anwendung festgestellt wird, dass die Spannungsversorgung kritisch wird, also beispielsweise dass der erste Energieparameter den zweite Energieparameter ggf. unerwartet übersteigt. Insoweit kann vorgesehen sein, dass die Anwendung kontrolliert beendet bzw. kontrolliert abgebrochen wird. Ein Benutzer kann benachrichtigt werden bzw. eine entsprechende Information auf einer Anzeige und/oder einem separaten Gerät angezeigt werden. Beispielsweise, wenn es sich bei der Anwendung um ein Software-Update handelt, kann der Ablauf wie folgt sein. Sobald ein kritischer Versorgungszustand festgestellt wird, kann das Steuergerät die Anwendung oder einen Teil der Anwendung fertig durchführen und/oder den Anwender benachrichtigen, beispielsweise über das separate Gerät, ein Terminal und/oder eine App, und insbesondere den Benutzer auffordern eine externe Energiequelle bzw. Spannungsversorgung anzuschließen. Nach Anschluss der externen Energiequelle kann die Anwendung auf demselben oder einem anderen Steuergerät zumindest teilweise oder bezüglich des restlichen Teils der Anwendung ausgeführt bzw. fortgesetzt werden. Die Alternative bzw. das Risiko wäre ohne das kontrollierte Beenden ansonsten, dass die Anwendung unkontrolliert abbricht und das Steuergerät somit unbenutzbar wird, schlimmstenfalls beschädigt wird.

Beim Ermitteln des ersten Energieparameters, insbesondere des benötigten Energiewerts, kann eine Dauer bzw. Zeitdauer zum Durchführen der Anwendung berücksichtigt werden. Beispielsweise ist es möglich, dass die Anwendung eine Information darüber bereitstellt, wie lange ihr Durchführen auf einem bestimmten bzw. auf dem Steuergerät dauert. Die Information kann entweder in der Anwendung enthalten sein oder durch das Verfahren, insbesondere das Steuergerät selbst und/oder eine Einrichtung, errechnet bzw. angenähert werden. Es können, je nach Konfiguration eines Steuergeräts (z.B. in Abhängigkeit von der Rechenleistung, des Arbeitsspeichers, etc.), mehrere Zeitdauern angegeben sein bzw. werden. Insoweit wird beispielsweise durch den ersten Energieparameter klargestellt, für welche Zeitdauer der Energiespeicher mindestens das Steuergerät zu versorgen hat, um die Anwendung durchzuführen.

Beim Ermitteln des ersten Energieparameters, insbesondere des benötigten Energiewerts, kann ein Typ eines Antriebsmotors bzw. Motors des Fahrzeug, eine Motortemperatur insbesondere des Antriebsmotors, ein Bordnetzverbrauch des Fahrzeugs und/oder ein zum Motorstart des Fahrzeugs benötigter Energiewert berücksichtigt werden. Beispielsweise kann eine Konfiguration des Fahrzeugs berücksichtigt werden, die darauf schließen lässt, welche Verbraucher bzw. Verbräuche abseits vom betroffenen Steuergerät während dem Aus- bzw. Durchführen der Anwendung und nach dem Durchführen der Anwendung relevant sind. Beispielsweise gibt es eine elektrische Grundlast bzw. elektrischen Verbrauch, der sich aus Ausstattungsmerkmalen bzw. Unterstützungssystemen des Fahrzeugs ergibt, beispielsweise Klimatisierung, Lüftung, Heizung, Beleuchtung, Kommunikationssystem, Überwachungssystem, Hydrauliksystem, Pneumatiksystem, Sicherheitseinrichtung, Zündung und/oder dergleichen. Weiter ist regelmäßig eine bestimmte Energiemenge, Mindestspannung, Startstrom und/oder dergleichen für den Motorstart des Antriebsmotors nötig, was beispielsweise in Abhängigkeit von Motortemperatur und/oder Außentemperatur recht genau bezifferbar sein kann. Hier kann der erste Energieparameter entsprechende Informationen berücksichtigen, so dass das Fahrzeug während und nach dem Durchführen der Anwendung noch elektrisch versorgt ist, insbesondere der Motorstart durchführbar ist.

Beim Ermitteln des ersten Energieparameters, insbesondere des benötigten Energiewerts, kann eine/die Mindestspannung zum Betreiben eines/des Steuergeräts und/oder eine Anzahl an Steuergeräten des Fahrzeugs berücksichtigt werden. Beispielsweise benötigt das Steuergerät zum ordnungsgemäßen Betrieb, insbesondere während dem Durchführen der Anwendung, eine anliegende Mindestspannung, exemplarisch wenigstens 5 V, 12 V, 24 V oder 48 V, damit es nicht abstürzt, sich ausschaltet und/oder Schaden nimmt. Es ist möglich, dass in Abhängigkeit von der Anzahl an Steuergeräten der erste Energieparameter anders ausfällt, beispielsweise mit größerer Anzahl an Steuergeräten größer ist.

Beim Ermitteln des zweiten Energieparameters, insbesondere des bereitstellbaren Energiewerts, kann eine elektrische Spannung des Energiespeichers und/oder eine in dem Energiespeicher enthaltene Ladungsmenge berücksichtigt werden. Alternativ oder ergänzend kann beim Ermitteln des ersten Energieparameters, insbesondere des bereitstellbaren Energiewerts, ein Zeitraum berücksichtigt werden, für den der Energiespeicher das Bordnetz des Fahrzeugs versorgen kann, insbesondere die Mindestspannung bereitstellen kann. Es ist möglich, dass der zweite Energieparameter einen Spannungseinbruch beim Motorstart berücksichtigt. Beispielsweise wird der Spannungseinbruch beim Motorstart regelmäßig analysiert, um als historischer Wert beim vorgeschlagenen Verfahren herangezogen werden zu können. Insoweit kann eine minimale Spannung gemessen bzw. gespeichert werden, die vorliegt, wenn der Antriebsmotor gestartet wird. Dies kann als Indiz für den Gesundheitszustand des Energiespeichers gewertet werden; je niedriger, desto schlechter kann der Zustand sein bzw. desto niedriger kann der zweite Energieparameter gewählt werden. Es ist auch möglich, einen Anstieg bzw. eine Erholung der Spannung nach Belastung, z.B. nach dem Motorstart, gemessen in Spannung pro Zeit (z.B. V/s), beim Ermitteln des zweiten Energieparameters heranzuziehen; hier ist ein größerer Wert regelmäßig bevorzugt mit Blick auf einen guten Gesundheitszustand. Es ist auch möglich, eine Veränderung des Abfalls der Spannung bei konstanter Versorgung des Bordnetzes beim Ermitteln des zweiten Energieparameters heranzuziehen, insbesondere als Spannung pro Zeit im Quadrat (z.B. V/s²). Auch können bereits erfasste Vorfälle von zu geringer Spannungsversorgung im Bordnetz seit einem letzten registrierten Tausch des Energiespeichers beim Ermitteln des zweiten Energieparameters berücksichtigt werden.

Beim Ermitteln des zweiten Energieparameters, insbesondere des bereitstellbaren Energiewerts, kann eine Kapazität, ein Batterietechnologie, ein Alter, eine Zeit seit letztem Motorlauf des Fahrzeugs und/oder eine Höhe eines Ruhestroms des Energiespeichers berücksichtigt werden. Die Kapazität kann beispielsweise ins Verhältnis mit einer Energiemenge bzw. Ladung in dem Energiespeicher gesetzt werden, um den Ladezustand zu erhalten. Die Batterietechnologie kann EFB, AGM, Gel und/oder Lithium umfassen. Das Alter kann beispielsweise in zwei oder mehr Altersbereiche aufgeteilt sein, beispielsweise "0 bis zu 6 Monate" und "mehr als 6 Monate", wobei ersteres zu einem höheren zweiten Energieparameter als letzteres führen kann, weil neuere Energiespeicher regelmäßig leistungsfähiger als ältere Energiespeicher sind. Je länger der Antriebsmotor still stand, desto höher ist die Wahrscheinlichkeit, dass der Energiespeicher entladen ist; daher ist die Zeit seit letztem Motorlauf auch ein möglicher Wert. Insoweit können hier zwei oder mehr zeitliche Bereiche Bereiche vorgesehen sein, beispielsweise "0 bis zu 1 Tag", "1 Tag bis zu 7 Tage", "mehr als 7 Tage" und/oder dergleichen. Es kann auch eine Temperatur bzw. Energiespeichertemperatur beim Ermitteln des zweiten Energieparameters berücksichtigt werden, denn typischerweise sind Energiespeicher nur in gewissen Temperaturbereichen voll leistungsfähig. Insoweit können zwei oder mehr Temperaturbereiche vorgesehen sein, beispielsweise "weniger als 0°C", "0°C bis 10°C", "mehr als 10°C", "weniger als 30°C", und/oder dergleichen.

Vorgeschlagen wird weiter ein landwirtschaftliches Fahrzeug mit einer Einrichtung zur Beurteilung der Durchführbarkeit von Anwendungen auf einem Steuergerät des landwirtschaftlichen Fahrzeugs, wobei die Einrichtung zum Durchführen eines computerimplementierten Verfahrens zur Beurteilung einer Durchführbarkeit von Anwendungen auf dem durch einen elektrischen Energiespeicher mit Energie versorgten Steuergerät des landwirtschaftlichen Fahrzeugs mit dem Energiespeicher und/oder des vorgeschlagenen Verfahrens ausgebildet ist. Vorzugsweise stellt das Steuergerät die Einrichtung bereitstellt. Die Einrichtung kann beispielsweise wenigstens teilweise durch ein auf dem Steuergerät ausgeführtes Programm bzw. einer solchen Anwendung bereitgestellt sein.

Vorgeschlagen wird weiter das Steuergerät selbst, also insbesondere ohne das Fahrzeug und insbesondere eingerichtet zur Verwendung in dem Fahrzeug. Vorgeschlagen wird weiter die Einrichtung selbst, insbesondere in Form eines Computerprogrammprodukts, beispielsweise bereitgestellt auf einem Datenträger. Ebenso wird eine Verwendung des Steuergeräts und/oder der Einrichtung in einem bzw. dem landwirtschaftlichen Fahrzeug vorgeschlagen.

Im Rahmen der Offenbarung steht die Abkürzung "bzw." als Kurzform für "beziehungsweise" und soll alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" und "oder" können stets durch "und/oder" ersetzt werden. Weitere vorteilhafte Ausgestaltungen sind Gegenstand weiterer Unteransprüche und werden nachfolgend anhand in mehreren Figuren dargestellter Ausführungsbeispiele beschrieben. Es zeigen:
- Figur 1: ein landwirtschaftliches Fahrzeug mit einem Steuergerät und einer Einrichtung zur Beurteilung der Durchführbarkeit von Anwendungen auf dem Steuergerät
- Figur 2: ein computerimplementiertes Verfahren in schematischer Ansicht

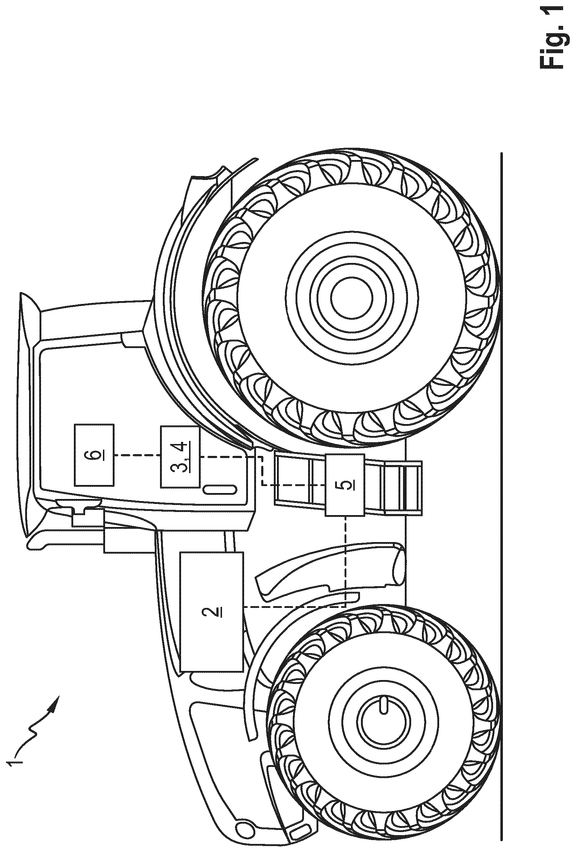

Fig. 1 zeigt ein landwirtschaftliches Fahrzeug 1 in Form eines Traktors in einer schematischen Seitenansicht. Das Fahrzeug 1 weist einen Motor 2 bzw. Antriebsmotor auf, der als Verbrennungsmotor ausgebildet ist. Der Motor 2 ist eingerichtet, um das Fahrzeug 1 anzutreiben. Ferner weist das Fahrzeug 1 ein Steuergerät 4 auf, das eine Einrichtung 3 bereitstellt. Die Einrichtung 3 ist insbesondere computerimplementiert durch das Steuergerät 4 bereitgestellt. Außerdem ist ein elektrischer Energiespeicher 5 vorgesehen, der zum Anlassen des Motors 2 einen Anlasser des Motors 2 versorgen kann, der von einer vom Motor 2 angetriebenen Lichtmaschine versorgt werden kann und/oder der das Steuergerät 4 versorgen kann. Außerdem weist das Fahrzeug 1 eine Anzeige 6 auf, die insbesondere eingerichtet ist, Inhalte bezüglich des Steuergeräts 4 bzw. der Einrichtung 3 anzuzeigen.

Die Einrichtung 3 ist zur Beurteilung der Durchführbarkeit von Anwendungen bzw. Programmen auf dem Steuergerät 4 vorgesehen, insbesondere dazu eingerichtet. Die Einrichtung 3 ist insbesondere zum Durchführen eines Verfahrens ausgebildet, wobei sich das Verfahren zur Beurteilung der Durchführbarkeit von Anwendungen eignet.

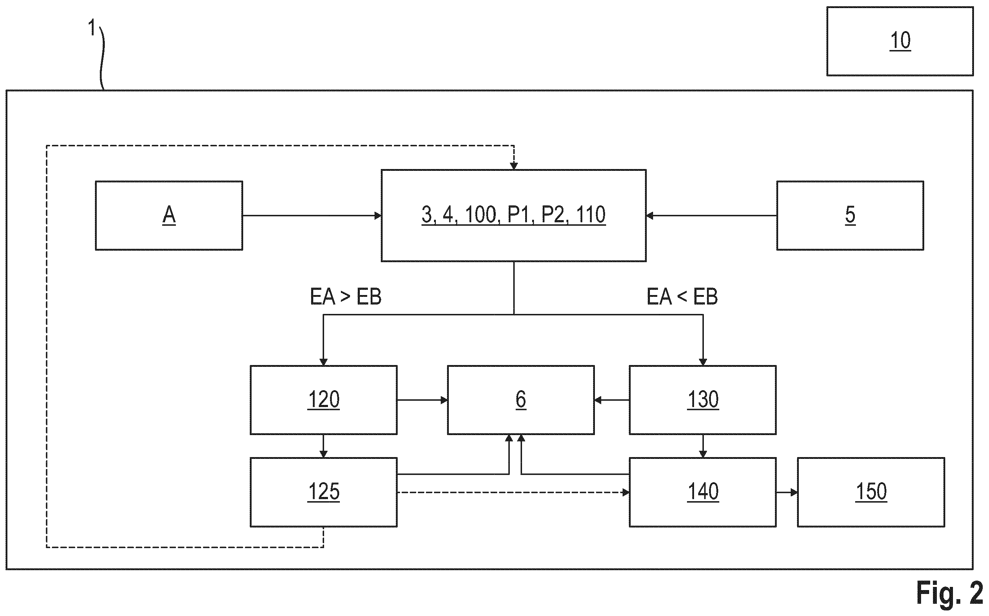

Fig. 2 zeigt ein Verfahren zur Beurteilung der Durchführbarkeit von Anwendungen A auf einem durch einen elektrischen Energiespeicher 5 mit Energie versorgten Steuergerät 4 eines landwirtschaftlichen Fahrzeugs 1 mit dem Energiespeicher 5. Beispielsweise handelt es sich um das Verfahren, das das Fahrzeug 1 aus Fig. 1 durchführen kann.

Grundsätzlich zeigt Fig. 2 einen Verlauf des Verfahrens und mittels Pfeilen die Verknüpfungen zwischen den Verfahrensschritten und/oder den beteiligten Entitäten. Beispielsweise fließen Daten bzw. Informationen aus einer Anwendung A und von dem Energiespeicher 5 zum Steuergerät 4, das eine Einrichtung 3 bereitstellt, die das Verfahren durchführt bzw. ausführt.

Das Verfahren umfasst ein Ermitteln 100 eines ersten Energieparameters P1, der auf einem zum Durchführen einer Anwendung A benötigten Energiewert EA basiert, und eines zweiten Energieparameters P2, der auf einem von dem Energiespeicher 5 bereitstellbaren Energiewert EB basiert. Die Energieparameter P1, P2 umfassen jeweils mehrere der Energiewerte EA, EB. Das Ermitteln 100 wird durch die Einrichtung 3 vollzogen. Zudem wird ein Vergleichen 110 durch die Einrichtung 3 vollzogen.

Das Verfahren umfasst, insbesondere nach dem Ermitteln 100, das Vergleichen 110 des ersten P1 und des zweiten P2 Energieparameters. Beispielsweise werden einzelne, mehrere oder alle der Energiewerte EA, EB miteinander verglichen, um festzustellen, welche Energiewerte EA, EB größer sind, insbesondere ob einer der benötigten Energiewerte EA größer als einer der bereitstellbaren Energiewerte EB ist, und/oder ob der Energiespeicher 5 dem Steuergerät 4 genügend Energie zum Durchführen der Anwendung A bereitstellen kann.

Das Verfahren umfasst, insbesondere nach dem Vergleichen 110, ein Unterbinden 120 oder Zulassen 130 eines Ausführens 140 der Anwendung A. Insbesondere erfolgt dies in Abhängigkeit von dem Vergleichen 110. Je nachdem wie der Vergleich ausfällt, kann das Unterbinden 120 oder das Zulassen 130 erfolgen.

Wenn ein bereitstellbarer Energiewert EB (z.B. die Ladungsmenge des Energiespeichers 5) kleiner ist als ein korrespondierende benötigter Energiewert EA (z.B. die zum Ausführen der Anwendung A benötigte Ladungsmenge), also folglich der Logik "EA > EB", dann folgt in der Regel das Unterbinden 120. Anders gesagt erfolgt bei einem Überschreiten des zweiten Energieparameters P2 durch den ersten Energieparameter P1, insbesondere einem Überschreiten eines der bereitstellbaren Energiewerte EB durch den korrespondierenden benötigten Energiewert EA, das Unterbinden 120. Vorliegend kann dann ein Anschließen 125 einer von dem Fahrzeug 1 separaten elektrischen Energiequelle angefordert und das Anschließen 125 abgewartet werden, um bei angeschlossener Energiequelle das Zulassen 130 durchzuführen bzw. das Ausführen 140 zu vollziehen oder das Vergleichen 110 zu wiederholen; dies ist durch jeweils gestrichelte Pfeile ausgehend von dem mit Bezugszeichen 125 versehenden Kasten angedeutet. Es kann also, beispielsweise wenn der angeforderte Energiebedarf größer ist, als eine bereitstellbare Energiemenge, das Ausführen 140 der Anwendung A verweigert werden und ebenfalls es kann der Anschluss eines Ladegeräts als eine Anforderung für das Ausführen 140 angeordnet werden, um das Durchführen der Anwendung A sicherzustellen.

Wenn ein bereitstellbarer Energiewert EB (z.B. die Ladungsmenge des Energiespeichers 5) größer ist als ein korrespondierender benötigter Energiewert EA (z.B. die zum Ausführen der Anwendung A benötigte Ladungsmenge), also folglich der Logik "EA < EB", dann folgt in der Regel das Zulassen 130. Anders gesagt erfolgt bei einem Unterschreiten des zweiten Energieparameters P2 durch den ersten Energieparameter P1, insbesondere einem Unterschreiten eines der bereitstellbaren Energiewerte EB durch den korrespondierenden benötigten Energiewert EA, das Zulassen 130. Vorliegend kann dann die Anwendung A im Schritt 140 ausgeführt werden, insbesondere wenn andere Bedingungen, die hier nicht betrachtet werden, erfüllt werden (beispielsweise ausreichender Speicherplatz auf dem Steuergerät 4 oder ausreichende Kompatibilität des Steuergeräts 4, etc.).

Bei dem Vergleichen 110 wird mithin eine Differenz zwischen dem zweiten Energieparameter P2 und dem ersten Energieparameter P1 berechnet. Basierend auf der Differenz zeigt die Anzeige 6 des Fahrzeugs und optional eine Anzeige eines vom Fahrzeug 2 separaten Geräts 10 einen Inhalt zur Durchführbarkeit von Anwendungen A an. Die Anzeige 6 und das Gerät 10 können jeweils Informationen oder Benachrichtigungen darüber liefern, ob die Anwendung A durchführbar ist, durchgeführt wird, durchgeführt worden ist, wie lange das Durchführen noch dauert, ob der Energiespeicher 5 aufgeladen werden muss, wie lange der Energiespeicher 5 noch aufgeladen werden muss, und/oder dergleichen. Die Anzeige 6 bzw. das Gerät 10 kann sich basierend auf Informationen von den mit Bezugszeichen 120, 125, 130 und/oder 140 bezeichneten Schritten bedienen bzw. diese darstellen oder melden.

Nach dem Vergleichen 110 und dem Zulassen 130 erfolgt vorliegend das Ausführen 140 der Anwendung A. Während des Ausführens 140 wird eine Spannung des Energiespeichers 5 überwacht. Wenn die Spannung des Energiespeichers 5 eine Mindestspannung zum Betreiben des Steuergeräts 4 unterschreitet, wird das Anschließen 125 einer/der von dem Fahrzeug 1 separaten elektrischen Energiequelle angefordert und hilfsweise, beispielsweise sollte die Energiequelle nicht binnen eines vorbestimmten Zeitraumes angeschlossen werden, das Ausführen 140 insbesondere im Schritt 150 kontrolliert beendet. Der Schritt 150 kann sich auch auf ein reguläres Beenden der Anwendung A beziehen, also den Abschluss der Durchführung und damit z.B. ein erfolgreiches Software-Update.

Beim Ermitteln 100 des ersten Energieparameters P1, insbesondere des benötigten Energiewerts EA, werden eine Dauer zum Durchführen der Anwendung A, ein Typ des Motors 2, eine Motortemperatur des Motors 2, ein Bordnetzverbrauch des Fahrzeugs 1 und ein zum Motorstart des Fahrzeugs 1 benötigter Energiewert berücksichtigt. Weiter werden die Mindestspannung zum Betreiben des Steuergeräts 4 und im Fall mehrerer Steuergeräte 4 eine Anzahl an Steuergeräten 4 des Fahrzeugs 1 berücksichtigt. Beim Ermitteln 100 des zweiten Energieparameters P2, insbesondere des bereitstellbaren Energiewerts EB, werden eine elektrische Spannung des Energiespeichers 5, eine in dem Energiespeicher 5 enthaltene Ladungsmenge bzw. Energiemenge und ein Zeitraum, für den der Energiespeicher 5 das Bordnetz des Fahrzeugs versorgen kann und insbesondere die Mindestspannung bereitstellen kann, berücksichtigt. Außerdem werden eine Kapazität, ein Batterietechnologie, ein Alter, eine Zeit seit letztem Motorlauf des Fahrzeugs 2 und eine Höhe eines Ruhestroms des Energiespeichers 5 berücksichtigt.

### Bezugszeichenliste:

- 1: Fahrzeug
- 2: Motor
- 3: Einrichtung
- 4: Steuergerät
- 5: Energiespeicher
- 6: Anzeige

- 10: Gerät

- 100: Ermitteln
- 110: Vergleichen
- 120: Unterbinden
- 125: Anschließen
- 130: Zulassen
- 140: Ausführen
- 150: Beenden

- A: Anwendung
- EA: benötigter Energiewert bzw. Energiebedarf
- EB: bereitstellbarer Energiewert bzw. Energiebedarf
- P1: erster Parameter
- P2: zweiter Parameter

## Patentansprüche

1. Computerimplementiertes Verfahren zur Beurteilung einer Durchführbarkeit von Anwendungen (A) auf einem durch einen elektrischen Energiespeicher (5) mit Energie versorgten Steuergerät (4) eines landwirtschaftlichen Fahrzeugs (1) mit dem Energiespeicher (5), das Verfahren umfassend
ein Ermitteln (100) eines ersten Energieparameters (P1), der auf einem zum Durchführen einer Anwendung (A) benötigten Energiewert (EA) basiert, und eines zweiten Energieparameters (P2), der auf einem von dem Energiespeicher (5) bereitstellbaren Energiewert (EB) basiert,
ein Vergleichen (110) des ersten (P1) und des zweiten (P2) Energieparameters, und
ein Unterbinden (120) oder Zulassen (130) eines Ausführens (140) der Anwendung (A) in Abhängigkeit von dem Vergleichen (110).

2. Verfahren nach Anspruch 1, wobei bei einem Überschreiten des zweiten Energieparameters (P2) durch den ersten Energieparameter (P1), insbesondere einem Überschreiten des bereitstellbaren Energiewerts (EB) durch den benötigten Energiewert (EA), das Unterbinden (120) erfolgt und/oder ein Anschließen (125) einer von dem Fahrzeug (1) separaten elektrischen Energiequelle angefordert und das Anschließen (125) abgewartet wird, um bei angeschlossener Energiequelle das Zulassen (130) durchzuführen oder das Vergleichen (110) zu wiederholen.

3. Verfahren nach einem der voranstehenden Ansprüche, wobei bei dem Vergleichen (110) eine Differenz zwischen dem zweiten (P2) und dem ersten (P1) Energieparameter berechnet wird, und wobei basierend auf der Differenz eine Anzeige (6) des Fahrzeugs (2) und/oder eines vom Fahrzeug (2) separaten Geräts (10) einen Inhalt zur Durchführbarkeit von Anwendungen (A) anzeigt.

4. Verfahren nach einem der voranstehenden Ansprüche, wobei nach dem Vergleichen (110) und/oder dem Zulassen (130) das Ausführen (140) der Anwendung (A) erfolgt und während des Ausführens (140) eine Spannung des Energiespeichers (5) überwacht wird, und wobei, wenn die Spannung des Energiespeichers (5) eine Mindestspannung zum Betreiben eines/des Steuergeräts (4) unterschreitet, ein/das Anschließen (125) einer/der von dem Fahrzeug (1) separaten elektrischen Energiequelle angefordert und/oder das Ausführen (140) kontrolliert beendet wird.

5. Verfahren nach einem der voranstehenden Ansprüche, wobei beim Ermitteln (100) des ersten Energieparameters (P1), insbesondere des benötigten Energiewerts (EA), eine Dauer zum Durchführen der Anwendung (A) berücksichtigt wird.

6. Verfahren nach einem der voranstehenden Ansprüche, wobei beim Ermitteln (100) des ersten Energieparameters (P1), insbesondere des benötigten Energiewerts (EA), ein Typ eines Motors (2) des Fahrzeugs (1), eine Motortemperatur, ein Bordnetzverbrauch des Fahrzeugs (1) und/oder ein zum Motorstart des Fahrzeugs (1) benötigter Energiewert berücksichtigt wird.

7. Verfahren nach einem der voranstehenden Ansprüche, wobei beim Ermitteln (100) des ersten Energieparameters (P1), insbesondere des benötigten Energiewerts (EA), eine/die Mindestspannung zum Betreiben eines/des Steuergeräts (4) und/oder eine Anzahl an Steuergeräten (4) des Fahrzeugs (1) berücksichtigt wird.

8. Verfahren nach einem der voranstehenden Ansprüche, wobei beim Ermitteln (100) des zweiten Energieparameters (P2), insbesondere des bereitstellbaren Energiewerts (EB),
eine elektrische Spannung des Energiespeichers (5) und/oder eine in dem Energiespeicher (5) enthaltene Ladungsmenge berücksichtigt wird, und/oder
ein Zeitraum berücksichtigt wird, für den der Energiespeicher (5) das Bordnetz des Fahrzeugs versorgen kann, insbesondere die Mindestspannung bereitstellen kann.

9. Verfahren nach einem der voranstehenden Ansprüche, wobei beim Ermitteln (100) des zweiten Energieparameters (P2), insbesondere des bereitstellbaren Energiewerts (EB),
eine Kapazität, ein Batterietechnologie, ein Alter, eine Zeit seit letztem Motorlauf des Fahrzeugs (2) und/oder eine Höhe eines Ruhestroms des Energiespeichers (5) berücksichtigt werden.

10. Landwirtschaftliches Fahrzeug (1) mit einer Einrichtung (3) zur Beurteilung der Durchführbarkeit von Anwendungen (A) auf einem Steuergerät (4) des landwirtschaftlichen Fahrzeugs, wobei die Einrichtung (3) zum Durchführen eines Verfahrens nach einem der voranstehenden Ansprüche ausgebildet ist, und vorzugsweise wobei das Steuergerät (4) die Einrichtung (3) bereitstellt.
